# EUROPEAN PATENT SPECIFICATION

(11) **EP 1 976 734 B1**
(45) Date of publication and mention of the grant of the patent: **02.09.2009**
(21) Application number: 07700363.0
(22) Date of filing: 11.01.2007
(51) Int. Cl.: B60R 25/02

(54) **ELECTRONIC CONTROL SYSTEM FOR A VEHICLE**
ELEKTRONISCHES STEUERSYSTEM FÜR EIN FAHRZEUG
SYSTÈME DE COMMANDE ÉLECTRONIQUE POUR UN VÉHICULE

(30) Priority: 23.01.2006 GB 0601343
(43) Date of publication of application: 08.10.2008
(73) Proprietor: Chevalier, John Phillip, London NW3 7RD (GB)
(72) Inventor: Chevalier, John Phillip, London NW3 7RD (GB)
(74) Representative: Jennings, Nigel Robin
(86) International application number: PCT/GB2007/000073
(87) International publication number: WO 2007/083085

(56) References cited:
- EP-A1- 0 307 344
- EP-A1- 0 745 522
- EP-A2- 0 396 090
- FR-A1- 2 805 054

## Description

This invention relates to an electronic control system for safety or security critical devices and systems, and it is particularly useful in a vehicle for supplying power to electrical actuators such as a steering column lock or a door latch or a tailgate latch.

Such an electronic control systems is disclosed in EP 0 396 090 A according to the preamble of claim 1.

Safety is of paramount importance in vehicle electronic control systems, and it is important for example that doors should not be allowed to open electrically, or a steering column be locked electrically, whilst the vehicle is in motion. Modem vehicles have a large number of devices controlled electrically, and a large number of condition sensors at various places in the vehicle for sensing conditions such as engine management status, fuel supply rate, vehicle tilt, brake actuation status and vehicle speed. The purpose of the present invention is to provide a safe way of actuating devices in the vehicle using power from the battery or alternator, which significantly reduces the possibility of electrical malfunction as a result of wiring error, software faults or even deliberate interference.

The invention provides an electronic control system for a vehicle having plural device actuators, each device being configured to provide an output signal indicative of its actuation status, the vehicle also having inputs for requesting actuation of the respective devices and generating corresponding actuation request signals, and vehicle condition sensors for providing vehicle condition signals indicative of vehicle parameters such as speed and tilt or the status of vehicle components; the system comprising: a slave controller associated with each device; and a master controller; the master and slave controllers all being connected to receive at least some of the vehicle condition signals, the master controller being connected to receive the actuation request signals and to receive the status output signals from all the devices and being in two-way data communication with all the slave controllers, and each slave controller being connected to receive a corresponding actuation request signal and to receive power from the master controller and to provide power to its respective device; the master controller being arranged to supply power to the slave controller only if it has independently received a corresponding actuation request signal and it determines from the vehicle condition signals that it is safe and appropriate to do so; and the slave controller being responsive to an actuation request signal requesting actuation of its device, to any relevant vehicle condition signals and to the respective status output signal, to supply the power from the master controller to the device to control the actuation of the device only in the event that the slave controller determines from the said signals that it is safe and appropriate to do so.

The use of independent master and slave controllers, independently analysing vehicle condition and independently analysing a request for actuation, significantly reduces the likelihood of unsafe conditions arising, particularly when the master and slave controllers are arranged in separate parts of the vehicle and the slave controllers are housed adjacent their devices.

Having all the feedback signals emanating from the devices (e.g latches) ignored when the vehicle is in motion would not alone be sufficient to safeguard against accidental or unsafe actuation. For example, it could be made impossible to lock or unlock and power release any of the doors if a signal were initiated in a latch whilst the vehicle is in motion (i.e. when the vehicle reaches a speed of 5Km/h or so). However, this would not safeguard against software malfunctions or electrical faults in the slave or master circuitry without the help of such an arrangement as is specified in this invention. It is worth noting that unlike the function of electrical power door release, the functions of locking and unlocking whilst the vehicle is still in motion could still be made possible, if desired, by using either the locking switch inside the vehicle or the inertia switch (normally used to trigger the airbags and unlock all doors in case of a crash).

In order that the invention may be better understood, a preferred embodiment will now be described, with reference to the accompanying drawings, in which:
Figure 1 is a diagram showing system data flow embodying the present invention;
Figure 2 shows part of the electronic system in a vehicle, embodying the invention;
Figure 3 shows a block diagram of a door latch forming part of the system of Figures 1 and 2; and
Figure 4 is a block diagram of a master controller of the system of Figures 1 and 2.

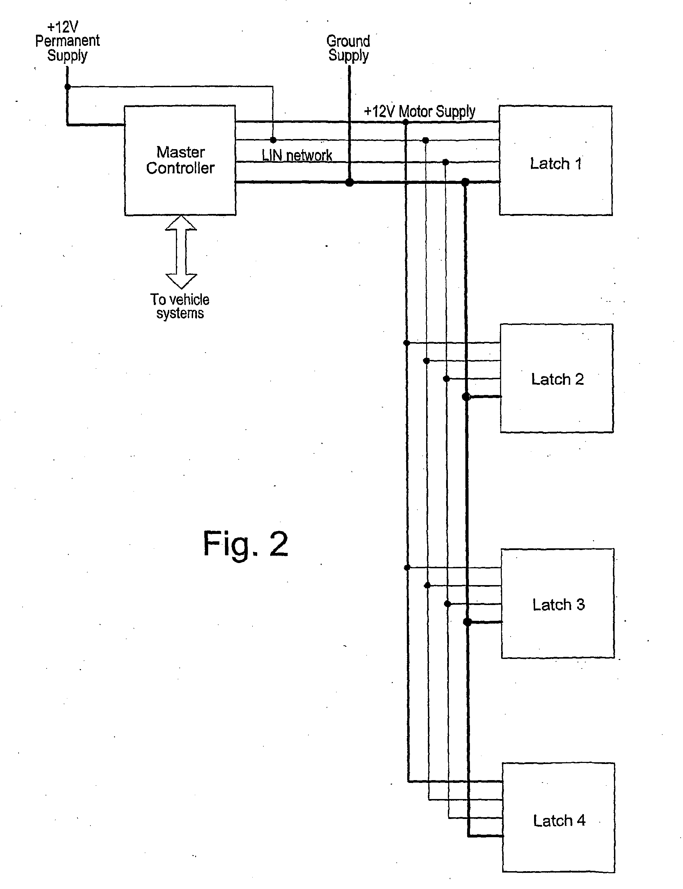

As shown in Figure 2, a vehicle has four door latches. These are examples of devices, and other examples would be an electrical steering column lock, which is also powered by an electric motor and which also has a sensor for providing an output signal indicative of its actuation status. Such output signals are provided to the system data network, as shown in Figure 2. These sensors on board the devices could for example be electromechanical switches such as reed switches, micro-switches, inertia switches, and piezo-electric pressure pads, potentiometric switches or electromagnetic switches such as capacitive or inductive switches, or optical switches or solid state sensors such as Hall effect sensors, etc.

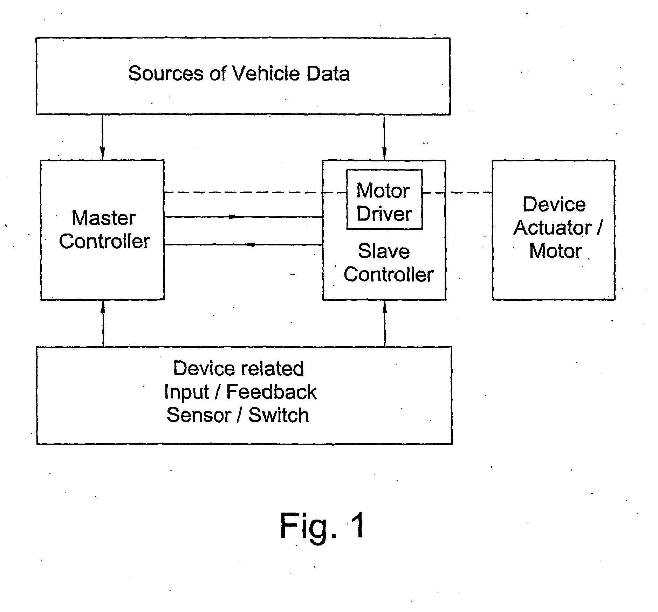

The conventional vehicle electronic control unit, shown as "sources of vehicle data" in Figure 1, is connected to a plurality of vehicle condition sensors in the vehicle, which provide condition signals indicative of vehicle parameters such as speed and tilt or the status of vehicle components; these may sense brake actuation status and engine management status and fuel supply rate, for example.

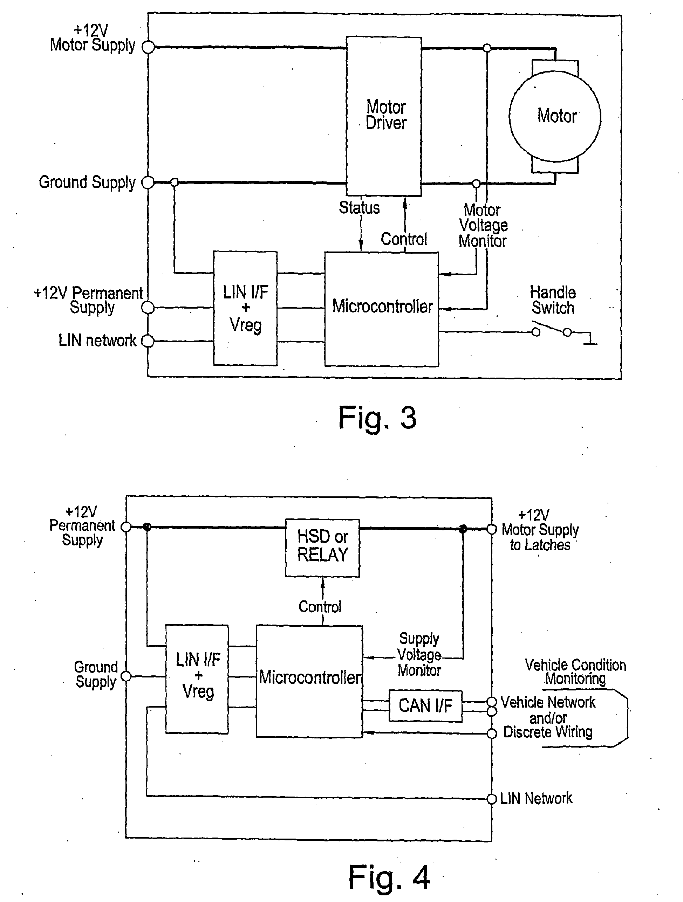

As shown in Figures 2 and 4, there is a +12 volt permanent supply, connected to the vehicle battery and alternator control circuitry. The ground supply at 0 volts is connected to the vehicle structure.

In the example shown in Figure 2, the permanent power supply is provided not only to the master controller but also to each of the devices, i.e. the four latches. However, this power supply to the devices is only for the purpose of powering the control circuitry, and not for powering the respective devices. Thus the permanent supply is connected to the slave controllers, shown as the micro-controller in Figure 3, entirely separately from the power supply intended for the motor driver within the latch shown in Figure 3. As shown in Figures 2, 3 and 4, the master controller of Figure 4 selectively provides output power at +12 volts to each of the latches; control circuitry in the master controller ensures that this is provided only for a predetermined duration.

As shown in Figure 3, the latch has an electric motor for actuating mechanical components, providing functionality such as door opening and locking. The latch may be controllable by other motive means such as a valve or solenoid. Electrical power to the motor is supplied by a motor driver, whose status is sent in the form of an electrical signal to the micro-controller which controls the motor driver. The voltage supply to the motor is monitored and fed back to the micro-controller as a signal. An input in the form of a switch provides a control signal to the micro-controller, indicative that the user of the vehicle wishes to open the door. This is illustrated in Figure 1 as the flow of data from "device related input/feedback sensor/switch" to the slave controller.

The communication between the master and slaves may be by individual wires or by a serial link such as an industry standard network such as CAN (Controller Area Network) or LIN (Local Interconnect Network); or a bespoke network. The examples show the master and slaves sharing information over a LIN bus. The LIN Interface (LIN I/F) shown may be any suitable LIN bus driver circuit. The examples also show a typical arrangement for a local voltage regulator (VREG). The permanent power supply for the control circuits may be integrated into the control circuitry or supplied from an external regulator.

The master controller is shown in Figure 4. This also responds to the vehicle condition, through vehicle network and/or discrete wiring supplied to the micro-controller. This controls the power to the actuators with a relay or electronic switch such as an HSD (High Side Driver). It is equally possible to isolate the power to the actuator by switching off the negative side of the actuator with a relay or electronic switch. This supply voltage is monitored and fed back as a signal to the micro-controller.

The micro-controller in the latch, shown in Figure 3, is arranged to enter a sleep mode, with significantly reduced power consumption, whenever it detects that the vehicle is in motion. When it senses that it is safe for its device potentially to be actuated, for example when the vehicle is stationary and also when the brakes are applied and fuel supply rate is below a predetermined level, then it will wake up.

It will be understood that the motor driver can be located e.g. inside the latch as shown in Figure 3, or else secured for example by bolts onto the outside of the latch or in a convenient location independent from the Master Controller. Inter-circuitry connections could be used, or cabling, or radio communications. In this way, electrical connections supplying power to the motor are not exposed, and this reduces the risk of interference by a thief, and of accidental short-circuits.

Separation of the master controller from the slave controllers helps reduce the risks of adverse effects of short circuits, and this may be achieved by providing the master controller in a separate housing, located in a different part of the vehicle, and linked for example by appropriate cables, or by radio communications using transceivers. However, the master controller may share the same housing with at least one slave controller, communicating with it or with them by inter-circuitry connections or by cabling.

The LIN bus is private within this electronic control system, dedicated to the security of the operation of the devices, and it is not connected to any other of the vehicle data systems.

The sequence of operations in the electronic control system of Figures 1 to 4 will now be described.

A request for actuation of a device is initiated in the individual device by the operation of a dedicated switch or for example by any other dedicated means such as a key fob or other system related input. At the same time, the master and slave controllers share specific predetermined data about the state of the vehicle, such as the speed of the car; the state of the engine; and the security status of the car such as whether it is locked or unlocked, whether the door is open, and whether the car alarm is on or off; and whether an engine immobiliser is active.

The data received by the master and slave controllers, indicative of vehicle condition, is passed on from the source directly and independently from any other controllers or systems that may be sharing the same data.

An independent actuation request by the slave controller is issued to the master controller which in turn compares this request with a similar request received independently by the master controller. This request must be seen at the same time by the master controller and the individual slave controller: these controllers have the same specific software parameters such as masking, polling and duration of actuation.

The master controller then allows power to be supplied to the specific slave controller, for a predetermined period of time, provided that it determines from the vehicle condition that it is safe and appropriate to do so.

This slave controller detects the availability of the current supplied from the master controller, and also detects the request from the master controller to effect actuation. The slave controller compares all corroborative data, including the independently-obtained request, and then initiates the actuation if everything appears to be safe and appropriate, the actuation being initiated according to the specific parameters programmed in the micro-processor.

A summary of the sequential actions taken by the slave and master controllers, all of which receive corresponding device status signals and at least some of the vehicle status signals, as appropriate, is given below:

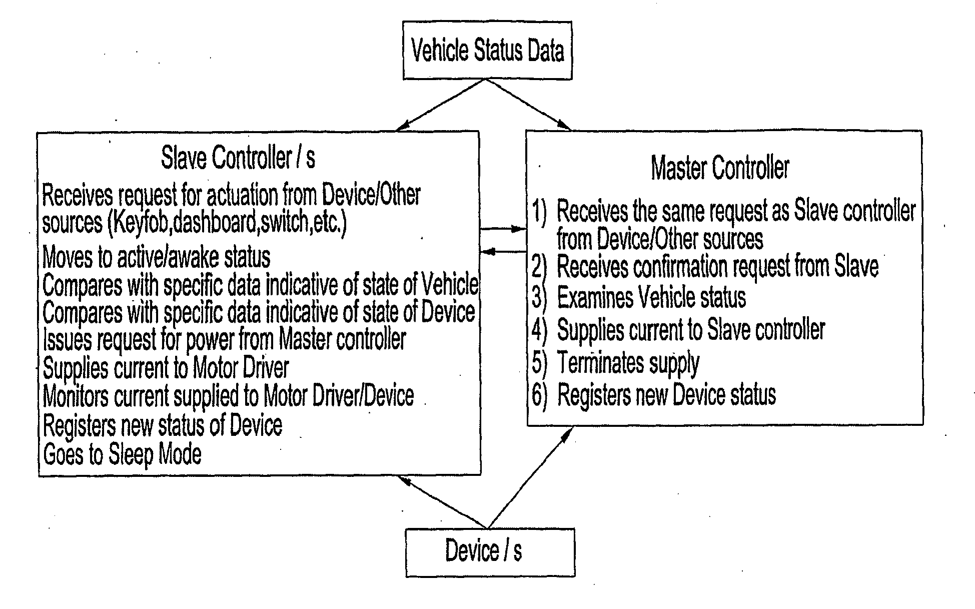

There are also self diagnostic procedures in the specific slave controllers and in the master controller relying on other data including for example the monitoring of the voltage and current being processed. These procedures are intended to detect errors. For example, one error is the motor power being supplied for too long: a master controller fault or a wiring fault. Another would be the exterior door handle switch being stuck: a mechanical or an electrical failure. A further error would be that the master controller cannot communicate with one of the latches: a wiring or latch failure. If the master controller cannot communicate with any latch, then this would be a system failure.

Accordingly, the likelihood of any failure causing unsafe or unintended actuation of any of the devices in the vehicle is negligible. A failure of the latch, attempting to drive the latch motor unexpectedly, will have no effect since the motor will not have any power. A failure in the master controller causing power to be supplied, together with a valid power-release request, will have no effect, since the latch will ignore it, having received no independent request itself. A physical or algorithmic fault, or conflicting data, in any of the controllers or input devices will not induce an actuation of the devices, because a precisely predetermined and sequential logic has to be followed always before electrical power is allowed to go through to the motor.

An advantage of the system embodying the present invention is that it can be fitted into vehicles with existing electronic systems. The monitoring of road speed, for example, is also used for the drive away lock-in feature, so it does not add additional cost to the vehicle.

In the case of attempted theft of the vehicle, it is theoretically possible for the engine immobiliser to be de-activated and for the external wiring of the latch to be interfered with by the application of electrical power, but this power would still not be relayed to the motors since the thief would not have access to the interior of the latch which contains the micro-controller and motor driver.

Again, even if there were an accidental short circuit across the master controller, a simultaneous short circuit across the motor driver would be extremely unlikely.

Whilst the preferred embodiment includes the provision of device status information for use by all the controllers, this is not essential and could be omitted. Further, the exchange of slave request and master consent signals, whilst preferred, is not essential.

## Claims

1. An electronic control system for a vehicle having plural device actuators, the vehicle also having inputs for requesting actuation of the respective devices and generating corresponding actuation request signals, and vehicle condition sensors for providing vehicle condition signals indicative of vehicle parameters such as speed and tilt or the status of vehicle components;
the system comprising:
a slave controller associated with each device;
and a master controller;
the master and slave controllers all being connected to receive at least some of the vehicle condition signals, the master controller being connected to receive the actuation request signals from all the devices and being in two-way data communication with all the slave controllers, and each slave controller being connected to receive a corresponding actuation request signal and to receive power from the master controller and to provide power to its respective device;
**characterised by**
the master controller being arranged to supply power to the slave controller only if it has independently received a corresponding actuation request signal and it determines from the vehicle condition signals that it is safe and appropriate to do so;
and the slave controller being responsive to an actuation request signal requesting actuation of its device and to any relevant vehicle condition signals, to supply the power from the master controller to the device to control the actuation of the device only in the event that the slave controller determines from the said signals that it is safe and appropriate to do so.

2. An electronic control system according to Claim 1, in which the master controller is arranged to provide a master consent signal to the slave controller only in the event that it has independently received the corresponding actuation request signal and it determines from the vehicle condition signals that it is safe and appropriate to do so; and the slave controller is prevented from supplying power to the device unless it has received the master consent signal.

3. An electronic control system according to Claim 2, in which each slave controller is responsive to the actuation request signal to send a slave request signal to the master controller, and the master controller provides the corresponding master consent signal only in response to the slave request signal.

4. An electronic control system according to Claim 1, for use in a vehicle each of whose devices is configured to provide an output signal indicative of its actuation status, the master controller being responsive to the status output signal from any of the devices to determine whether it is safe and appropriate to supply the power to the corresponding device controller, and each slave controller being responsive to its respective device's status output signal to supply the power to the device only if it determines that it is safe and appropriate to do so.

5. An electronic control system according to Claim 1, in which at least one of the devices is a latch powered by an electric motor.

6. An electronic control system according to Claim 1, in which at least one of the devices is a steering column lock powered by an electric motor.

7. An electronic control system according to Claim 1, in which at least one of the devices is controllable by motive means such as a valve or a solenoid.

8. An electronic control system according to Claim 1, in which the slave controller is configured to enter and remain in a sleep mode, with reduced power consumption, when a vehicle condition signal is indicative of the vehicle being in motion.

9. An electronic control system according to Claim 1, in which the vehicle condition sensors are arranged to sense vehicle speed, vehicle tilt, vehicle brake actuation, engine state, vehicle security status, or engine fuel supply rate, or any combination of the aforesaid conditions.

10. An electronic control system according to Claim 1, comprising a power source connected to the master controller.

11. An electronic control system according to Claim 10, in which the power source is also connected to the slave controllers, for the purpose of powering the slave controlling circuitry but not for the actuation of the corresponding devices.

12. An electronic control system according to Claim 1, comprising the said vehicle condition sensors.

13. An electronic control system according to Claim 1, comprising the said inputs for requesting actuation.

14. An electronic control system according to Claim 13, in which the said inputs comprise a switch associated with a steering column lock.

15. An electronic control system according to Claim 13, the said inputs comprising a switch associated with a door handle.

16. An electronic control system according to Claim 1, in which the master controller is configured to supply power to the slave controller only for a predetermined period.

17. An electronic control system according to Claim 1, in which the master controller and at least one slave controller share the same housing and communicate with each other through inter-circuitry connections or cabling.

18. An electronic control system according to Claim 1, in which the master controller is housed separately from the slave controllers and is connected to the slave controllers by cabling.

19. An electronic control system according to Claim 1, in which the slave controllers are housed separately from their devices and are capable of radio communication with them.

20. An electronic control system according to Claim 1, in which each slave controller is housed adjacent its corresponding device so that no electrical connection supplying power from the slave controller to the device is exposed.

21. Apparatus comprising an electronic control system according to Claim 1, and plural door latches constituting the devices, each having one of said slave controllers.

22. Apparatus comprising an electronic control system according to Claim 1, and a steering column constituting the device having one of said slave controllers.

23. Apparatus comprising an electronic control system according to Claim 1, and a multiplicity of devices each having one of said slave controllers.

## Patentansprüche

1. Elektronisches Steuersystem für ein Fahrzeug mit einer Mehrzahl von Vorrichtungs-Betätigungsmitteln, wobei das Fahrzeug weiters Eingänge zum Anfordern einer Betätigung der jeweiligen Vorrichtung und zum Erzeugen entsprechender
Betätigungsanforderung-Signale, und Fahrzeugzustand-Sensoren zum Liefern von Fahrzeugzustand-Signalen enthält, die für Fahrzeugparameter, wie z.B. Geschwindigkeit und Neigung oder der Zustand von Fahrzeugkomponenten indikativ sind;
wobei das System umfasst:
einen jeder Vorrichtung zugeordneten Folgeregler;
und einen Führungsregler;
wobei die Führungs- und Folgeregler angeschlossen sind, um zumindest einige der Fahrzeugzustand-Signale zu empfangen, wobei der Führungsregler angeschlossen ist, um die
Betätigungsanforderung-Signale von allen Vorrichtungen zu empfangen, und wobei der Führungsregler mit allen Folgereglern in Zwei-Wege-Datenübertragung steht, und wobei jeder Folgeregler angeschlossen ist, um ein entsprechendes Betätigungsanforderung-Signal zu empfangen und um Energie vom Führungsregler zu empfangen und die jeweilige Vorrichtung mit Energie zu versorgen;
**dadurch gekennzeichnet, dass**
der Führungsregler eingerichtet ist, um den Folgeregler nur dann mit Energie zu versorgen, wenn er ein entsprechendes Betätigungsanforderung-Signal unabhängig empfangen hat und er aus den Fahrzeugzustand-Signalen bestimmt, dass es sicher und passend ist, so vorzugehen; und
dass der Folgeregler auf ein Betätigungsanforderung-Signal, mit dem die Betätigung seiner Vorrichtung verlangt wird, und auf jedwede relevante Fahrzeugzustand-Signale reagiert, um die Vorrichtung mit der Energie vom Führungsregler zu versorgen, um die Betätigung der Vorrichtung zu steuern, wobei dies nur dann erfolgt, wenn der Folgeregler aus den Signalen bestimmt, dass eine Versorgung der Vorrichtung mit Energie sicher und passend ist.

2. Elektronisches Steuersystem nach Anspruch 1, wobei der Führungsregler eingerichtet ist, um den Folgeregler nur dann mit einem Führungsregler-Zustimmungssignal zu versorgen, wenn er das entsprechende Betätigungsanforderung-Signal unabhängig empfangen hat und er aus den Fahrzeugzustand-Signalen bestimmt, dass es sicher und passend ist, so vorzugehen; und wobei der Folgeregler gehindert wird, die Vorrichtung mit Energie zu versorgen, außer wenn dieser das Führungsregler-Zustimmungssignal empfangen hat.

3. Elektronisches Steuersystem nach Anspruch 2, wobei jeder Folgeregler auf das Betätigungsanforderung-Signal reagiert, um dem Führungsregler ein Folgeregler-Anforderungssignal zu senden, und wobei der Führungsregler das entsprechende Führungsregler-Zustimmungssignal nur in Antwort auf das Folgeregler-Anforderungssignal liefert.

4. Elektronisches Steuersystem nach Anspruch 1 zur Verwendung in einem Fahrzeug, dessen Vorrichtungen alle eingerichtet sind, um ein Ausgangssignal zu liefern, das für deren Betätigungszustand indikativ ist, wobei der Führungsregler auf das Zustand-Ausgangssignal von jeder Vorrichtung reagiert, um zu bestimmen, ob ein Versorgen der jeweiligen Vorrichtungssteuerung mit Energie sicher und passend ist, und wobei jeder Folgeregler auf sein jeweiliges Vorrichtungszustand-Ausgangssignal reagiert, um die Vorrichtung nur dann mit Energie zu versorgen, wenn er bestimmt, dass dies sicher und passend ist.

5. Elektronisches Steuersystem nach Anspruch 1, wobei zumindest eine der Vorrichtungen eine von einem Elektromotor angetriebene Sperreinrichtung ist.

6. Elektronisches Steuersystem nach Anspruch 1, wobei zumindest eine der Vorrichtung ein von einem Elektromotor angetriebenes Lenksäulenschloss ist.

7. Elektronisches Steuersystem nach Anspruch 1, wobei zumindest eine der Vorrichtungen mithilfe von Antriebsmitteln, wie z.B. einem Ventil oder einem Solenoid, steuerbar ist.

8. Elektronisches Steuersystem nach Anspruch 1, wobei der Folgeregler eingerichtet ist, um in einen Schlafmodus mit verringertem Energieverbrauch überzugehen und in diesem zu bleiben, wenn ein Fahrzeugzustand-Signal dafür indikativ ist, dass sich das Fahrzeug bewegt.

9. Elektronisches Steuersystem nach Anspruch 1, wobei die Fahrzeugzustand-Sensoren eingerichtet sind, um die Fahrzeuggeschwindigkeit, die Fahrzeugneigung, eine Bremsbetätigung des Fahrzeugs, den Motorzustand, den Sicherheitszustand des Fahrzeugs oder die Rate der Kraftstoffzufuhr zum Motor oder jedwede Kombination davon zu erkennen.

10. Elektronisches Steuersystem nach Anspruch 1, mit einer mit dem Führungsregler verbundenen Energiequelle.

11. Elektronisches Steuersystem nach Anspruch 10, wobei die Energiesquelle auch mit den Folgereglern verbunden ist, um den Steuerschaltkreis der Folgeregler mit Energie zu versorgen, jedoch nicht um die entsprechenden Vorrichtungen zu betätigen.

12. Elektronisches Steuersystem nach Anspruch 1, das die Fahrzeugzustand-Sensoren enthält.

13. Elektronisches Steuersystem nach Anspruch 1, das die Eingänge zur Betätigungsanforderung enthält.

14. Elektronisches Steuersystem nach Anspruch 13, wobei die Eingänge einen Schalter aufweisen, der einem Lenksäulenschloss zugeordnet ist.

15. Elektronisches Steuersystem nach Anspruch 13, wobei die Eingänge einen Schalter aufweisen, der einem Türgriff zugeordnet ist.

16. Elektronisches Steuersystem nach Anspruch 1, wobei der Führungsregler eingerichtet ist, um den Folgeregler nur über einen vordefinierten Zeitraum mit Energie zu versorgen.

17. Elektronisches Steuersystem nach Anspruch 1, wobei sich der Führungsregler und zumindest ein Folgeregler das gleiche Gehäuse teilen und über Schaltverbindungen oder Verkabelungen miteinander kommunizieren.

18. Elektronisches Steuersystem nach Anspruch 1, wobei der Führungsregler getrennt von den Folgereglern aufgenommen und über Verkabelungen mit den Folgereglern verbunden ist.

19. Elektronisches Steuersystem nach Anspruch 1, wobei die Folgeregler getrennt von ihren Vorrichtungen aufgenommen und zur Kommunikation mit diesen über Funk in der Lage sind.

20. Elektronisches Steuersystem nach Anspruch 1, wobei jeder Folgeregler benachbart seiner entsprechenden Vorrichtung aufgenommen ist, so dass keine elektrische Verbindung, die Energie vom Folgeregler zur Vorrichtung zuführt, vorhanden ist.

21. Anordnung, die ein elektronisches Steuersystem nach Anspruch 1 und eine Mehrzahl von Türklinken enthält, die die Vorrichtungen darstellen, wobei jede davon einen der Folgeregler aufweist.

22. Anordnung, die ein elektronisches Steuersystem nach Anspruch 1 und eine Lenksäule enthält, die die Vorrichtung darstellt, die einen der Folgeregler aufweist.

23. Anordnung, die ein elektronisches Steuersystem nach Anspruch 1 und eine Mehrzahl von Vorrichtungen enthält, wobei jede einen der Folgeregler aufweist.

## Revendications

1. Système de commande électronique pour un véhicule comportant plusieurs actionneurs de dispositif, le véhicule comportant également des entrées pour demander l'actionnement des dispositifs respectifs et la génération des signaux correspondants de demande d'actionnement, et des capteurs d'état du véhicule pour fournir des signaux d'état du véhicule indiquant les paramètres du véhicule tels que la vitesse et l'inclinaison ou le statut des composants du véhicule ;
le système comprenant :
un contrôleur esclave associé à chaque dispositif ; et
un contrôleur maître ;
les contrôleurs maître et esclave étant tous reliés pour recevoir au moins une partie des signaux d'état du véhicule, le contrôleur maître étant relié pour recevoir les signaux de demande d'actionnement de tous les dispositifs et étant en communication de données bilatérale avec tous les contrôleurs esclaves, et chaque contrôleur esclave étant relié pour recevoir un signal correspondant de demande d'actionnement et pour recevoir la puissance du contrôleur maître et pour fournir la puissance à son dispositif respectif ;
**caractérisé en ce que** le contrôleur maître est agencé pour fournir la puissance au contrôleur esclave seulement s'il a reçu indépendamment un signal correspondant de demande d'actionnement et détermine à partir des signaux d'état du véhicule qu'il est sûr et approprié de le faire ;
et le contrôleur esclave étant réactif à un signal de demande d'actionnement demandant l'actionnement de son dispositif et aux signaux pertinents d'état du véhicule, pour fournir la puissance à partir du contrôleur maître au dispositif pour contrôler l'actionnement du dispositif seulement dans le cas où le contrôleur esclave détermine à partir desdits signaux qu'il est sûr et approprié de le faire.

2. Système de commande électronique selon la revendication 1, dans lequel le contrôleur maître est agencé pour fournir un signal d'accord de référence au contrôleur esclave seulement dans le cas où il a indépendamment reçu le signal correspondant de demande d'actionnement et il détermine à partir des signaux d'état du véhicule qu'il est sûr et approprié de le faire ; et le contrôleur esclave est empêché de fournir la puissance au dispositif sauf s'il a reçu le signal d'accord de référence.

3. Système de commande électronique selon la revendication 2, dans lequel chaque contrôleur esclave est réactif au signal de demande d'actionnement pour envoyer un signal de demande esclave au contrôleur maître, et le contrôleur maître fournit le signal d'accord de référence correspondant seulement en réponse au signal de demande esclave.

4. Système de commande électronique selon la revendication 1 pour une utilisation dans un véhicule, chacun de ces dispositifs étant configuré pour fournir un signal de sortie indicatif de son état d'actionnement, le contrôleur maître étant réactif au signal de sortie d'état provenant de l'un quelconque des dispositifs pour déterminer s'il est sûr et approprié de fournir la puissance au contrôleur de dispositif correspondant, et chaque contrôleur esclave étant réactif à son signal de sortie d'état de dispositif respectif pour fournir la puissance également au dispositif seulement s'il détermine qu'il est sûr et approprié de le faire.

5. Système de commande électronique selon la revendication 1, dans lequel au moins l'un des dispositifs est un verrou alimenté par un moteur électrique.

6. Système de commande électronique selon la revendication 1, dans lequel au moins l'un des dispositifs est un antivol de direction alimenté par un moteur électrique.

7. Système de commande électronique selon la revendication 1, dans lequel au moins l'un des dispositifs est contrôlable par un moyen moteur tel qu'une soupape ou un robinet électromagnétique.

8. Système de commande électronique selon la revendication 1, dans lequel le contrôleur esclave est configuré pour entrer et rester en mode de veille, avec une consommation de puissance réduite, quand un signal d'état du véhicule indique que le véhicule est en mouvement.

9. Système de commande électronique selon la revendication 1, dans lequel les capteurs d'état du véhicule sont agencés pour détecter la vitesse du véhicule, l'inclinaison du véhicule, l'actionnement des freins du véhicule, l'état du moteur, l'état de sécurité du véhicule, ou le débit de carburant du moteur, ou toute combinaison des conditions susmentionnées.

10. Système de commande électronique selon la revendication 1, comprenant une source de puissance reliée au contrôleur maître.

11. Système de commande électronique selon la revendication 10, dans lequel la source de puissance est également reliée aux contrôleurs esclaves, afin d'alimenter le circuit de commande esclave mais pas pour l'actionnement des dispositifs correspondants.

12. Système de commande électronique selon la revendication 1, comprenant lesdits capteurs d'état du véhicule.

13. Système de commande électronique selon la revendication 1, comprenant lesdites entrées pour demander l'actionnement.

14. Système de commande électronique selon la revendication 13, dans lequel lesdites entrées comprennent un commutateur associé à un antivol de direction.

15. Système de commande électronique selon la revendication 13, lesdites entrées comprenant un commutateur associé à une poignée de porte.

16. Système de commande électronique selon la revendication 1, dans lequel le contrôleur maître est configuré pour fournir la puissance au contrôleur esclave seulement pour une durée prédéterminée.

17. Système de commande électronique selon la revendication 1, dans lequel le contrôleur maître et au moins un contrôleur esclave partagent le même logement et communiquent l'un avec l'autre au travers de connexions ou de câblage entre les circuits.

18. Système de commande électronique selon la revendication 1, dans lequel le contrôleur maître est logé séparément des contrôleurs esclaves et est relié aux contrôleurs esclaves par un câblage.

19. Système de commande électronique selon la revendication 1, dans lequel les contrôleurs esclaves sont logés séparément de leurs dispositifs et sont capables d'établir une communication radio avec eux.

20. Système de commande électronique selon la revendication 1, dans lequel chaque contrôleur esclave est logé adjacent à son dispositif correspondant de telle sorte qu'aucune connexion électrique alimentant la puissance à partir du contrôleur esclave au dispositif ne soit exposée.

21. Appareil comprenant un système de commande électronique selon la revendication 1, et plusieurs serrures de porte constituant les dispositifs, chacune comportant l'un desdits contrôleurs esclaves.

22. Appareil comprenant un système de commande électronique selon la revendication 1, et une colonne de direction constituant le dispositif comportant l'un desdits contrôleurs esclaves.

23. Appareil comprenant un système de commande électronique selon la revendication 1, et une multiplicité de dispositifs, comportant chacun l'un desdits contrôleurs esclaves.
